# EUROPÄISCHE PATENTSCHRIFT

(11) **EP 0 909 885 B1**
(45) Veröffentlichungstag und Bekanntmachung des Hinweises auf die Patenterteilung: **06.12.2000**
(21) Anmeldenummer: 98890295.3
(22) Anmeldetag: 13.10.1998
(51) Int. Cl.: F02B 23/10

(54) **Brennkraftmaschine mit Fremdzündung**
Combustion engine with spark ignition
Moteur à combustion à allumage commandé

(30) Priorität: 16.10.1997 AT 64097 U
(43) Veröffentlichungstag der Anmeldung: 21.04.1999
(73) Patentinhaber: AVL List GmbH, 8020 Graz (AT)
(72) Erfinder: Wirth, Martin, Dipl.-Ing.Dr., 8151 Hitzendorf (AT); Piock, Walter, Dr., 8151 Hitzendorf (AT)
(74) Vertreter: Babeluk, Michael, Dipl.-Ing. Mag.

(56) Entgegenhaltungen:
- EP-A- 0 598 941
- EP-A- 0 741 237

## Beschreibung

Die Erfindung betrifft eine Brennkraftmaschine mit Fremdzündung und zumindest einem hin- und hergehenden Kolben, mit einer in einer dachförmigen Brennraumdeckfläche angeordneten Zündeinrichtung und mindestens einer Kraftstoffeinbringungseinrichtung pro Zylinder zur direkten Kraftstoffeinbringung im wesentlichen in Richtung Zündeinrichtung, sowie mit zumindest einem drallerzeugend ausgebildeten Einlaßkanal, wobei der Kolben eine asymmetrisch geformte Kolbenmulde aufweist, deren Muldenwände als die Drallbewegung der Zylinderladung unterstützende, bogenförmige Strömungsleitflächen ausgebildet sind.

Ständig steigende Anforderungen an den Kraftstoffverbrauch und die Reduktion der Abgasemissionen, insbesondere der Kohlenwasserstoffe, erfordern den Einsatz neuer Technologien im Bereich der Verbrennungskraftmaschinen. Durch den heute üblichen Einsatz einer externen Gemischbildung bei Otto-Motoren, wie z. B. durch die Verwendung einer Saugrohreinspritzung oder eines Vergasers, strömt ein Teil des in den Brennraum und Zylinder eingesaugten Gemisches während der Ventilüberschneidungsphase, wenn Auslaß- und Einlaßventil gleichzeitig offen sind, in den Auspufftrakt der Brennkraftmaschine. Ein nicht unerheblicher Teil der meßbaren unverbrannten Kohlenwasserstoffe im Auspufftrakt stammt auch von Gemischteilen, die sich während der Verbrennung in Ringspalten oder wandnahen Bereichen, wo keine Verbrennung stattfindet, aufhalten. Zu diesen genannten Punkten kommt die notwendige Homogenisierung der Zylinderladung bei einem annähernd stöchiometrischen Mischungsverhältnis von Kraftstoff und Luft hinzu, welches eine sichere und aussetzerfreie Verbrennung sicherstellt. Dies bedingt eine Regelung der Motorlast mit Hilfe eines Drosselorganes zur Begrenzung der insgesamt angesaugten Gemischmenge (Quantitätsregelung).

Diese Drosselung der Ansaugströmung führt zu einem thermodynamischen Verlust, der den Kraftstoffverbrauch der Verbrennungskraftmaschine erhöht. Das Potential zur Verbrauchsreduzierung der Verbrennungskraftmaschine bei Umgehung dieser Drosselung kann auf etwa 20 % geschätzt werden.

Um diese Nachteile zu verhindern bzw. zu vermindern, werden schon seit langem Versuche unternommen, fremdgezündete Verbrennungskraftmaschinen ungedrosselt zu betreiben und den Kraftstoff erst nach Beendigung der Luftansaugung wie bei einer selbstzündenden Brennkraftmaschine innerhalb des Brennraums und Zylinders oder einer unmittelbar angeschlossenen Mischkammer einzubringen.

Dabei sind grundsätzlich drei Gemischbildungssysteme zu unterscheiden:
- Flüssigkeitshochdruckeinspritzung
- Luftunterstützte Kraftstoff-Einbringung
- Gemischeinblasung.

Aus der SAE 780699 ist ein Verfahren bekannt, bei dem der Kraftstoff mittels einer Hochdruckeinspritzdüse direkt in den Brennraum der Verbrennungskraftmaschine eingespritzt wird. Die notwendige Zeit für die Aufbereitung des Gemisches begrenzt den zeitlichen Minimalabstand zwischen Einspritzzeitpunkt und Zündzeitpunkt. Es ist ein hohes Druckniveau für den Einspritzvorgang notwendig, um einerseits kurze Einspritzzeiten und andererseits eine gute Zerstäubung des Kraftstoffes mit entsprechend kleinem Tropfenspektrum zu erhalten. Die Aufbereitung und Dosierung des Kraftstoffes findet gleichzeitig statt. Um nur ein örtlich begrenztes Gebiet mit brennbarem Kraftstoff-Luftgemisch zu erhalten ist es andererseits notwendig, erst sehr spät im Motorzyklus den Kraftstoff einzubringen (ggf. erst während der Kompression kurz vor der Zündung), um die Zeit für die Ausbreitung und Verdünnung des Gemisches in der Brennraumluft zu begrenzen. Die Forderungen nach genügend früher Einspritzung für vollständige Kraftstoffverdampfung und möglichst später Einspritzung zur Aufrechterhaltung der Gemischschichtung stehen daher im Gegensatz zueinander. Die Entwicklungsbemühungen müssen somit darauf gerichtet sein, einerseits die charakteristische Zeit für die Gemischaufbereitung zu verkürzen und andererseits die charakteristische Zeit der Aufrechterhaltung der gewünschten Gemisch-Schichtung zu verlängern.

Aus dieser Zielsetzung ergibt sich die allgemeine Aufgabe, aus der eingespritzten Kraftstoffmenge eine örtlich begrenzte Gemischwolke zu erzeugen, diese von der Mündung des Einspritzorgans in die Nähe der Zündkerze zu transportieren und das Gemisch innerhalb der Wolke weiter mit Brennraumluft zu vermischen. Dabei sind folgende Punkte wesentlich:
- Die Gemischwolke muß insbesondere bei niedrigen Motorlasten deutlich abgegrenzt bleiben und sich aus thermodynamischen Gründen sowie zur Reduzierung der Emissionen unverbrannter Kohlenwasserstoffe möglichst in der Mitte des Brennraumes befinden.
- Die Vermischung des eingebrachten Kraftstoffes auf ein zündfähiges und vorzugsweise stöchiometrisches Luftverhältnis muß in der kurzen Zeitspanne zwischen Einblasezeitpunkt und Zündzeitpunkt erfolgen.
- An der Zündkerze sollte eine geringe mittlere Strömungsgeschwindigkeit und gleichzeitig ein hohes Turbulenzniveau herrschen, um die Entflammung der Gemischwolke durch den Zündfunken zu begünstigen.

Ein wichtiges Problem eines solchen Brennverfahrens liegt in den zyklischen Schwankungen des Gemischbildungsvorganges, also der Änderung des Ablaufes von einem Motorzyklus zum nächsten aufgrund der Turbulenz der Strömungsvorgänge im Ansaugsystem und Zylinder der Brennkraftmaschine. Um diese Schwankungen so gering wie möglich zu halten, sollte im Zylinder eine Strömungsform erzeugt werden, die eine hohe Stabilität aufweist und insbesondere während der Kompressionsphase des Motorzyklusses erhalten bleibt und nicht in ungeordnete turbulente Strömungsbewegungen übergeht. Diese Forderung wird am besten von einer Drallströmung erfüllt.

Unter einer Drallströmung versteht man die Rotationströmung im Zylinder, die in an sich bekannter Weise um eine im wesentlichen zur Zylinderachse parallelen Achse erfolgt, die ebenfalls durch die Einlaßkanalgestaltung und die Einmündung des oder der Einlaßkanäle in den Brennraum und Zylinder der Brennkraftmaschine verursacht wird. Während der Kompression erfolgt nur eine geringfügige Veränderung des Strömungsbildes, da der Durchmesser des Wirbels durch die Kolbenbewegung nicht verändert wird. Vor dem oberen Totpunkt ist somit eine stabile Rotationsbewegung der angesaugten Luft im Brennraum und Zylinder gegeben.

Aus der EP 0 598 941 A1 ist das Prinzip einer Kolbenmulde bekannt, welche bei geeigneter Ausgestaltung die Strömung des um die Zylinderachse rotierenden Drallwirbels während der Kompressionsphase in Richtung auf die Zylinderachse umlenkt. Dies wird erreicht durch die nierenförmige zwei- oder dreiflügelige Ausgestaltung der Kolbenmulde. Die zwischen den Ausbuchtungen der Mulde liegenden Einzüge der Muldenseitenwand lenken die Drallströmung beim Eintritt in die Mulde während der Kompressionsphase zur Zylindermitte um, sodaß im Zentrum der Kolbenmulde durch Kollision der gegenüberliegenden und zur Zylindermitte gerichteten Strömungen ein deutlich erhöhtes Turbulenzniveau erreicht wird. Zusätzliche Turbulenzproduktion wird in dieser Art der Kolbenmulde durch Strömungsablösung an den Muldenkanten beim Eintritt der Drallströmung in die Kolbenmulde erreicht. Gleichzeitig wird in Zylindermitte im Bereich der dort vorzugsweise angeordneten Zündkerze aufgrund der rotationssymmetrischen Gestaltung eine niedrige mittlere Strömungsgeschwindigkeit erzeugt.

In der EP 0 598 941 A1 ist diese Produktion von Turbulenz das alleinige Ziel zur Beschleunigung der Verbrennung magerer Gemische und der Verdampfung von Kraftstoff-Wandfilmen.

In der EP A 0 741 237 A1 wird bei einer Brennkraftmaschine der eingangs genannten Art das Prinzip der mehrflügeligen Kolbenmulde in abgewandelter Form eingesetzt. Durch geeignete Ausgestaltung der Mulde wird erreicht, daß der Drallwirbel durch den Eintritt in die Mulde während der Kompression in Teilwirbel entsprechend der Flügelzahl der Mulde zerteilt wird, was zu Kollision der gegenüberliegenden Strömungen und damit zur Turbulenzproduktion in Zylindermitte führt. Bei der Aufteilung des Hauptwirbels in die Teilwirbel erfolgt eine Erhöhung der Umdrehungsgeschwindigkeit aufgrund der Verringerung des Wirbeldurchmessers (Drallerhaltung), was die Beeinflussung einer eingespritzten Kraftstoffwolke durch diese Strömung verstärkt.

Bei niedrigen Motorlasten und damit kleinen Gemischmengen, die eine besonders starke Schichtung der Luft-Gemischverteilung im Brennraum erfordern, erfolgt die Gemischeinbringung vorzugsweise sehr spät in der Kompressionsphase. Die Zylinderfüllung befindet sich damit bereits zum überwiegenden Teil in der Kolbenmulde d.h. die von der Kolbenmulde erzeugte umgeformte Strömungsbewegung stellt die dominierende Strömungsform im Brennraumvolumen dar. Das Einspritzorgan ist so angeordnet, daß der Einspritzstrahl von der exzentrisch zur Zylinderachse gelegenen Position des Einspritzorgans auf die Zylinderachse gerichtet in den Brennraum gelangt. Die Position des Einspritzorgans gegenüber der Kolbenmulde ist so eingerichtet, daß die Einspritzung in nur einen der beiden in der Mulde ausgebildeten Teilwirbel erfolgt. Die Zündkerze ist im Bereich der Brennraummitte angeordnet.

Mit dieser Einbringung des Kraftstoffes werden zwei Ziele verfolgt:
1. Da die beiden Teilwirbel stabile Strömungsstrukturen darstellen und in der Brennraummitte trotz der dort auftretenden Turbulenzproduktion nur ein geringer Gasaustausch zwischen den beiden Teilwirbeln erfolgt, wird auf diese Weise die Luftmenge, die an der weiteren Verdünnung des Gemisches teilnimmt, verringert.
2. Teile des vorzugsweise kegelförmigen Einspritzstrahls sowie die Randbereiche der in einem Teilwirbel befindlichen Gemischwolke werden in die zentral im Brennraum sich ausbildende Zone erhöhter Turbulenz transportiert. Dies wiederum stellt die beschleunigte Aufbereitung des stark unterstöchiometrisch eingespritzten Gemisches zu zündfähigem, vorzugsweise stöchiometrischem Gemisch in der unmittelbaren Nähe der etwa in Brennraummitte angeordneten Zündkerze bei gleichzeitig günstigen Zündbedingungen (erhöhte Turbulenz, geringe mittlere Geschwindigkeit) sicher. Damit werden alle zu stellenden Anforderungen zur Realisierung des angestrebten Brennverfahrens erfüllt:
   - Das eingespritzte oder eingeblasene Gemisch wird in einem Teilwirbel zu einer örtlich begrenzten und stabilen Gemischwolke eingeschlossen.
   - In der Zone erhöhter Turbulenzproduktion in Brennraummitte erfolgt eine beschleunigte Aufbereitung zu zündfähigem Gemisch.
   - Im Bereich der zentral angeordneten Zündkerze herrscht aufgrund der zur Zylindermitte symmetrischen Strömung eine geringe mittlere Geschwindigkeit bei gleichzeitig hoher Turbulenzintensität, was die Entflammung des Gemisches begünstigt.

Die in der EP 0 741 237 A1 gezeigte Brennraumgestaltung eignet sich vor allem für Brennkraftmaschinen mit vier Ventilen und einer zentralen Zündeinrichtung pro Zylinder, bei denen die direkte Kraftstoffeinspritzung in einem mittleren Bereich zwischen Brennraumrand und Brennraummitte erfolgt.

Aufgabe der vorliegenden Erfindung ist es, die eingangs genannte Brennkraftmaschine weiterzuentwickeln und die konstruktiven Freiheiten in der Anordnung der Kraftstoffeinbringungseinrichtung zu erhöhen und gleichzeitig die genannten Vorteile zumindest zu erhalten.

Erfindungsgemäß wird dies dadurch erreicht, daß die Kolbenmulde zwischen gegenüberliegenden Muldenwänden im wesentlichen als offener, im Grundriß betrachtet mäanderförmiger oder S-förmiger Kanal ausgebildet ist, wobei zumindest ein Ende des Kanales einen vom Bereich des Kolbenrandes ausgehenden Muldeneinlauf bildet. Während der Ansaugphase des Motors wird durch den zumindest einen drallerzeugend ausgebildeten Einlaßkanal ein Drallwirbel um die Zylinderlängsachse erzeugt. Während der Kompressionsphase teilt sich der Drallwirbel beim Eintritt in die Kolbenmulde in zwei gleichsinnig rotierende Teilwirbel auf, welche durch die Muldenwände der kanalförmigen Kolbenmulde zur Brennraummitte gelenkt werden. In zumindest einem Teilwirbel wird während der Kompressionsphase Kraftstoff über eine seitlich angeordnete Kraftstoffeinbringungseinrichtung eingespritzt bzw. eingeblasen. Das eingespritzte bzw. eingeblasene Gemisch wird durch die Teilwirbel zu einer örtlich begrenzten Gemischwolke eingeschlossen. Durch die erfindungsgemäße Gestaltung des Brennraumes bildet sich in der Brennraummitte eine Zone erhöhter Turbulenzproduktion, welche eine beschleunigte Aufbereitung der Gemischwolke zu zündfähigem Gemisch ermöglicht. Im Bereich der über der Kolbenmulde, beispielsweise zentral angeordneten Zündeinrichtung herrscht aufgrund der zur Brennraummitte gelenkten Strömung eine relativ geringe mittlere Geschwindigkeit bei gleichzeitig hoher Turbulenzintensität, was die Entflammung des Gemisches begünstigt.

Vorzugsweise ist vorgesehen, daß jedes Kanalende der Kolbenmulde als vorzugsweise flacher Muldeneinlauf ausgebildet ist, wobei der erste Muldeneinlauf auf der Einlaßseite und der zweite Muldeneinlauf auf der Auslaßseite angeordnet ist.

Eine besonders gute Führung der Teilwirbeln läßt sich erreichen, wenn an den ersten Muldeneinlauf ein erster konkaver Muldenwandabschnitt anschließt, welcher sich in einer vorzugsweise scharfen Kante mit einem vom zweiten Muldeneinlauf ausgehenden konvexen Wandabschnitt schneidet, und daß vom ersten Muldeneinlauf ein vom ersten konkaven Muldenwandabschnitt beabstandeter erster konvexer Muldenwandabschnitt ausgeht, welcher sich in einer weiteren Kante mit einem an den zweiten Muldeneinlauf anschließenden zweiten konkaven Muldenwandabschnitt schneidet.

Dabei ist in einer besonders bevorzugten Ausführungsvariante vorgesehen, daß der erste konkave Muldenwandabschnitt einen größeren Krümmungsradius aufweist als der zweite konkave Muldenwandabschnitt, wobei der Krümmungsradius des ersten konkaven Muldenwandabschnittes vorzugsweise ein Drittel bis zwei Drittel des Kolbenradiuses und der Krümmungsradius des zweiten konkaven Muldenwandabschnittes vorzugsweise ein Viertel bis ein Halb des Kolbenradiuses beträgt.

Um eine gute Führung der Teilwirbel zu erreichen, ist es vorteilhaft, wenn die Muldenwände zumindest abschnittsweise in zumindest einem konkaven Muldenwandabschnitt im wesentlichen parallel zur Kolbenachse ausgebildet sind. Es kann aber auch vorgesehen sein, daß die Muldenwände zumindest abschnittsweise in zumindest einem konkaven Muldenwandabschnitt überhängend ausgebildet sind. Sehr vorteilhaft für die Strömungsführung ist es, wenn die Muldenwände zumindest abschnittsweise in zumindest einem konvexen Muldenwandabschnitt einen stumpfen Winkel mit dem Muldenboden einschließt. Dadurch können Strömungsablösungen in diesem Bereich vermieden werden.

Besonders vorteilhaft ist es, wenn der Muldenrand zumindest teilweise durch eine Anformung an der Kolbenoberfläche gebildet ist und zumindest zum Teil über eine von der Kolbenaußenkante aufgespannte Bezugsebene hinausragt. Dadurch wird erreicht, daß die Drallströmung durch die außerhalb der Kolbenmulde als Quetschfläche wirkende Kolbenoberfläche in die kanalförmige Kolbenmulde gelenkt wird. Dieser Effekt wird insbesondere noch verbessert, wenn die Anformung zumindest teilweise der dachförmigen Begrenzung des Brennraumes nachgebildet ist.

Um beim Eintritt in die Kolbenmulde unerwünschte Verwirbelungen infolge Strömungsablösungen zu verhindern, ist es vorteilhaft, wenn die Kolbenmulde im Bereich zumindest eines Muldeneinlaufes zum Kolbem-and hin ausläuft

Um eine Konzentration des Brennstoffgemisches im Bereich der vorzugsweise mittig angeordneten Zündeinrichtung zu gewährleisten, ist es günstig, wenn der Flächenschwerpunkt der Brennraummulde im Bereich der Kolbenachse liegt.

Eine hohe Geschwindigkeit der Strömung beim Eintritt in die Kolbenmulde ist für eine gute Zerstäubung und einen raschen Transport des Gemisches in dem Bereich der Zündkerze von Vorteil. Um dies zu erreichen, ist vorgesehen, daß die Breite der Kolbenmulde - gemessen als Normal abstand zwischen zwei gegenüberliegenden Muldenwänden - im Bereich des Muldeneinlaufes am geringsten ist.

Die Erfindung wird im Folgenden anhand der Figuren näher erläutert.

Es zeigen:
- Fig. 1: die erfindungsgemäße Brennkraftmaschine in einem Längsschnitt nach der Linie I-I in den Fig. 2 bzw. 3,
- Fig. 2: eine Draufsicht auf den Kolben der Brennkraftmaschine aus Fig. 1,
- Fig. 3: einen Längsschnitt nach der Linie III-III in den Fig. 1 bzw. 2,
- Fig. 4: eine Ausführungsvariante der erfindungsgemäßen Brennkraftmaschine mit zwei Einlaß- und zwei Auslaßventilen,
- Fig. 5 und 6: weitere Ausführungsvarianten der erfindungsgemäßen Brennkraftmaschine mit drei Einlaß- und zwei Auslaßventilen,
- Fig. 7 und 8: Ausführungsvarianten der erfindungsgemäßen Brennkraftmaschine mit zwei Einlaß- und einem Auslaßventil, und
- Fig. 9: eine Ausführungsvariante der erfindungsgemäßen Brennkraftmaschine mit einem Einlaß- und einem Auslaßventil.

Funktionsgleiche Teile sind in den Ausführungsbeispielen mit gleichen Bezugszeichen versehen.

In einem Zylinder 1 ist ein hin- und hergehender Kolben 2 angeordnet. Die Oberfläche 3 des Kolbens 2 bildet zusammen mit der im Zylinderkopf 4 dachförmig ausgebildeten Brennraumdeckfläche 5 einen Brennraum 6 aus, in welchem eine Zündeinrichtung 8 einmündet. Die Mündung 10 einer Kraftstoffeinbringungseinrichtung 9 befindet sich am Rand des Brennraumes 6. Die Längsachse der Kraftstoffeinbringungseinrichtung ist mit 11 bezeichnet, der Winkel α zwischen der Längsachse 11 und einer Parallelen 7a zur Kolbenachse 7 beträgt etwa 40 bis 75°. Die Kraftstoffeinbringungseinrichtung 9 ist so angeordnet, daß ein eingespritzter Kraftstoffstrahl 12 im wesentlichen zur Zündeinrichtung 8 gerichtet ist und etwa im Bereich der Kolbenmulde 13 im oberen Totpunkt des Kolbens 2 auf dessen Oberfläche 3 auftrifft. Die über der Kolbenmulde 13 in den Brennraum 6 einmündende Zündeinrichtung 8 kann im Bereich der Kolbenachse 7 angeordnet sein oder zu dieser beabstandet sein. Die Kolbenmulde 13 ist - im Grundriß betrachtet - mäanderförmig bzw. S-förmig gestaltet, wobei die zwei gegenüberliegenden, im wesentlichen in gleicher Richtung verlaufenden Muldenwände 14, 15 einen offenen Kanal bzw. eine Rinne definieren, dessen bzw. deren Beginn und Ende als Muldeneinlauf 16a, 16b ausgebildet sind. Im Bereich jedes Muldeneinlaufes 16a, 16b läuft die Kolbenmulde 13 zum Kolbenrand 17 hin aus. Dadurch entsteht ein flacher Einlaufbereich für die durch die Pfeile 18 und 19 angedeuteten Drall-Teilströmungen in die Kolbenmulde 13.

Die Muldeneinläufe 16a, 16b sind an gegenüberliegenden Seiten des Kolbens angeordnet. Der erste Muldeneinlauf 16a liegt dabei auf der Einlaßseite 20, der zweite Muldeneinlauf 16b auf der Auslaßseite 21. Vom ersten Muldeneinlauf 16a geht ein konkaver Muldenwandabschnitt 22a aus, der sich bis auf die Auslaßseite 21 erstreckt, und in einer Kante 24 endet. In der Kante 24 schneidet sich dieser erste konkave Muldenwandabschnitt mit einem zweiten konvexen Muldenwandabschnitt, welcher vom zweiten Muldeneinlauf 16b ausgeht.

Vom ersten Muldeneinlauf 16a geht, in einem der Kanalbreite b entsprechenden Abstand zum ersten konkaven Muldenwandabschnitt 22a ein erster konvexer Muldenwandabschnitt 23a aus, der sich in einer anderen Kante 25 mit einem zweiten konkaven Muldenwandabschnitt 22b schneidet, welcher an den zweiten Muldeneinlauf 16b anschließt. Dabei ist vorzugsweise der Krümmungsradius r₁ des ersten konkaven Muldenwandabschnittes 22a größer ausgeführt als der Krümmungsradius r₂ des zweiten konkaven Muldenwandabschnittes 22b. Der Krümmungsradius r₁ beträgt dabei vorzugsweise ein Drittel bis zwei Drittel des Kolbenradiuses R. Der Krümmungsradius r₂ kann zwischen einem Viertel und der Hälfte des Kolbenradiuses R liegen. Dadurch ergibt sich, daß im Bereich der Muldeneinläufe 16a, 16b die Breite b der Kolbenmulde 13 - gemessen als Normalabstand zwischen den Muldenwänden 14, 15 - kleiner ist als im zentralen Muldenbereich im Bereich der Zündeinrichtung 8, in welchen die Einspritzung ausgerichtet ist. Der Flächenschwerpunkt F der Kolbenmulde 13 liegt dabei bevorzugt im Bereich der Kolbenachse 7.

Wesentlich ist, daß Ablösungserscheinungen im Einströmbereich in die Kolbenmulde 13 vermieden werden, um ungewollte Verwirbelungen zu vermeiden. Trotzdem soll die Drallströmung sicher in den zentralen Bereich der Kolbenmulde gelenkt werden. Um dies zu erreichen, ist es vorteilhaft, wenn die konkaven Muldenwandbereiche 22a, 22b möglichst steil, also im wesentlichen in Richtung der Kolbenachse 7 ausgebildet sind. Die konkaven Muldenwände können dabei sogar auch überhängend ausgeführt werden, um die Strömungsführung weiter zu verbessern. Andererseits können die konvexen Bereiche 23a und 23b der Muldenwände 14, 15 flach ausgebildet sein, und mit dem Muldenboden 25 einen stumpfen Winkel einschließen. Dadurch können Verwirbelungen der durch die Quetschflächen 27 und 28 der Oberfläche 3 des Kolbens 2 über die konvexen Muldenwandbereiche 23a und 23b gedrückten Drallteilströmungen 18, 19 vermieden werden. Aus dem gleichen Grund werden die Muldeneinläufe 16a, 16b, in welchen die Kolbenmulde 13 in den Kolbenrand 17 übergehen, möglichst flach ausgeführt.

Die Oberfläche 3 des Kolbens 2 ist zumindest teilweise der dachförmigen Brennraumdeckfläche 5 nachgebildet und weist dadurch zumindest eine Anformung 36 auf, welche über eine von der Kolbenaußenkante 2a aufgespannte Bezugsebene 2b hinausragt. Dabei wird der Muldenrand 13a der Kolbenmulde 13 zumindest zum Teil durch die Anformung 36 gebildet.

Es hat sich gezeigt, daß durch die erfindungsgemäße Kolbenform große konstruktive Freiheiten in der Anordnung der Kraftstoffeinbringungseinrichtung 9, der Zahl der Ein- und Auslaßventile 31, 29 und der Einlaßkanäle 32 entstehen.

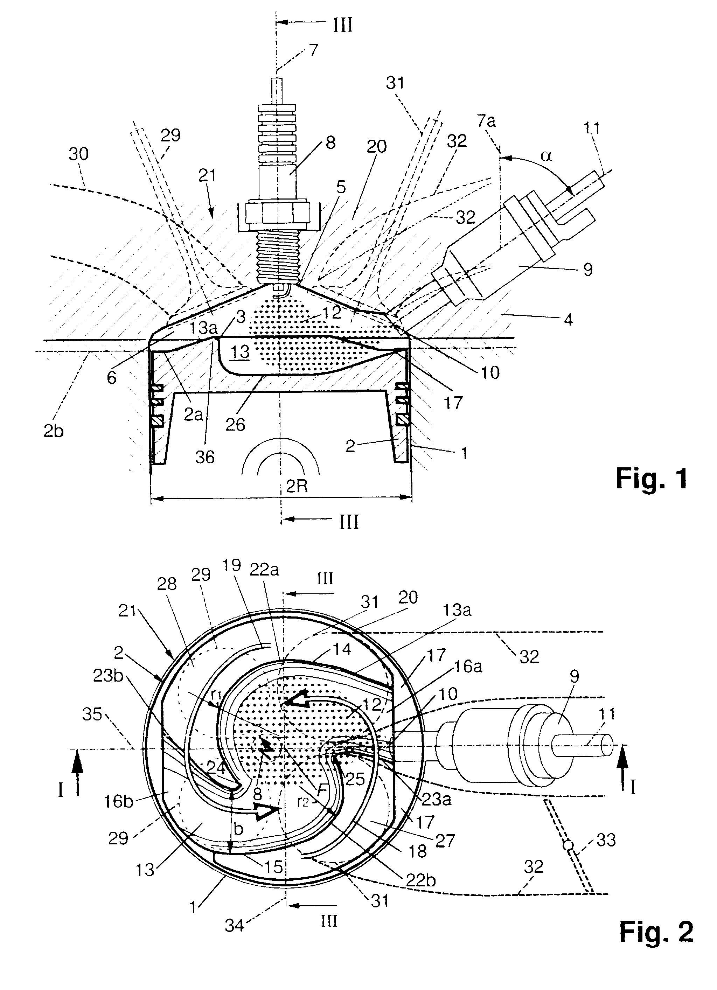

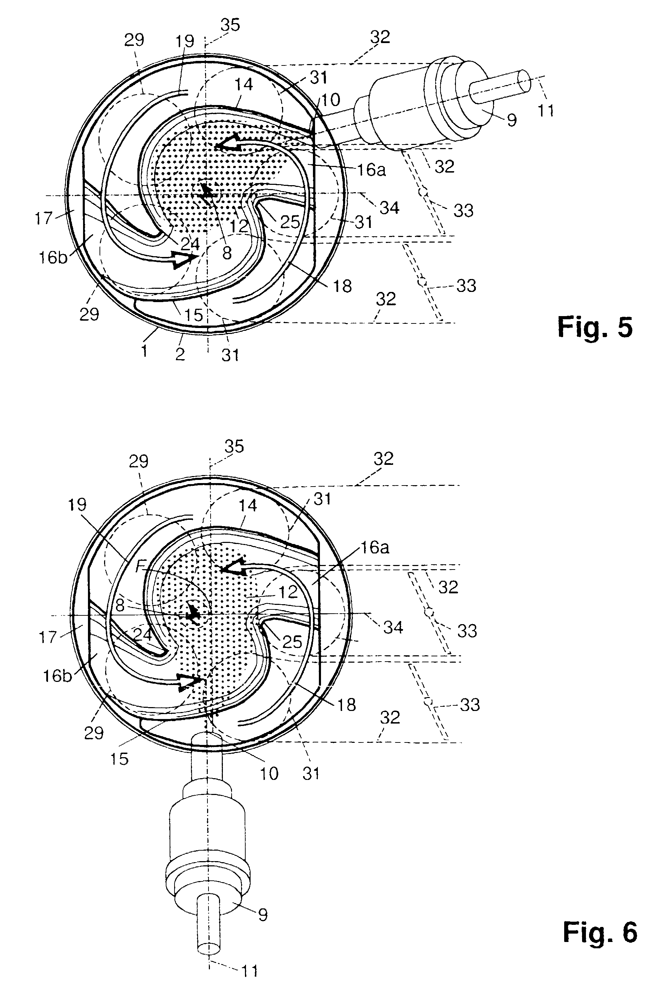

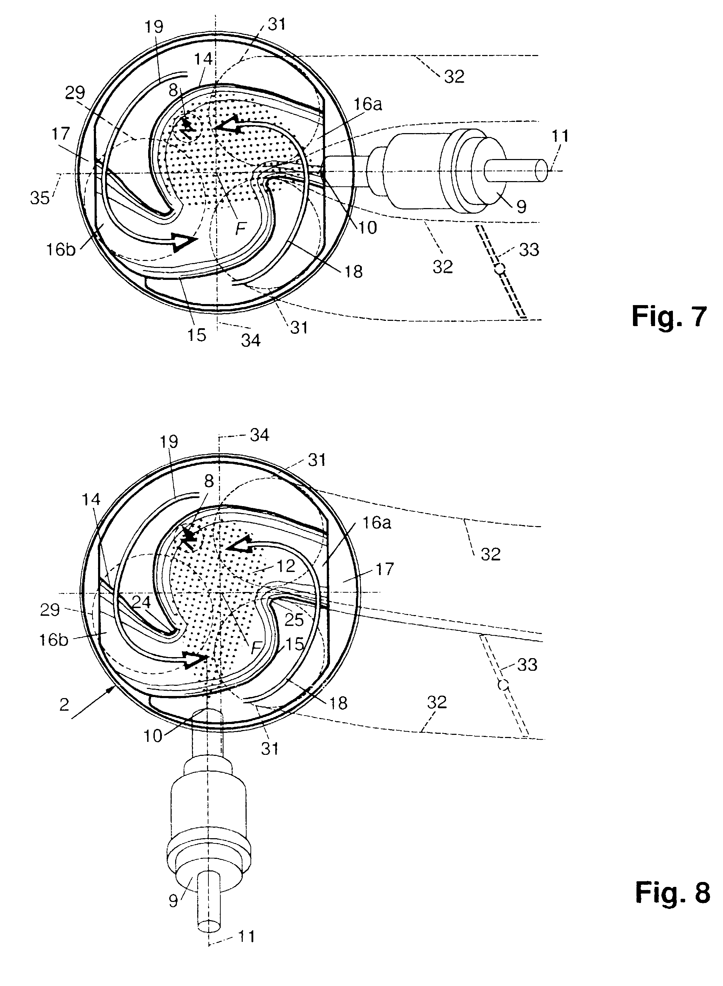

So ist in den Fig. 1 bis 3 eine Brennkraftmaschine mit zwei Auslaßventilen 29 und Auslaßkanälen 30, sowie mit zwei Einlaßventilen 31 und zwei Einlaßkanälen 32 gezeigt, wobei die Kraftstoffeinbringungseinrichtung 9 zwischen den beiden Einlaßkanälen 32 angeordnet ist. Das gleiche Konzept kann auch bei einer Variante mit zwei Auslaßventilen 29 und drei Einlaßventilen 31, wie in Fig. 5 dargestellt ist, oder bei der in Fig. 7 schematisch gezeichneten Ausführung mit einem Auslaßventil 29 und zwei Einlaßventilen 31 angewandt werden. Bei diesen Fällen liegt die Mündung 10 der Kraftstoffeinspritzeinrichtung 9 - im Grundriß betrachtet - zwischen zwei Einlaßkanälen 32.

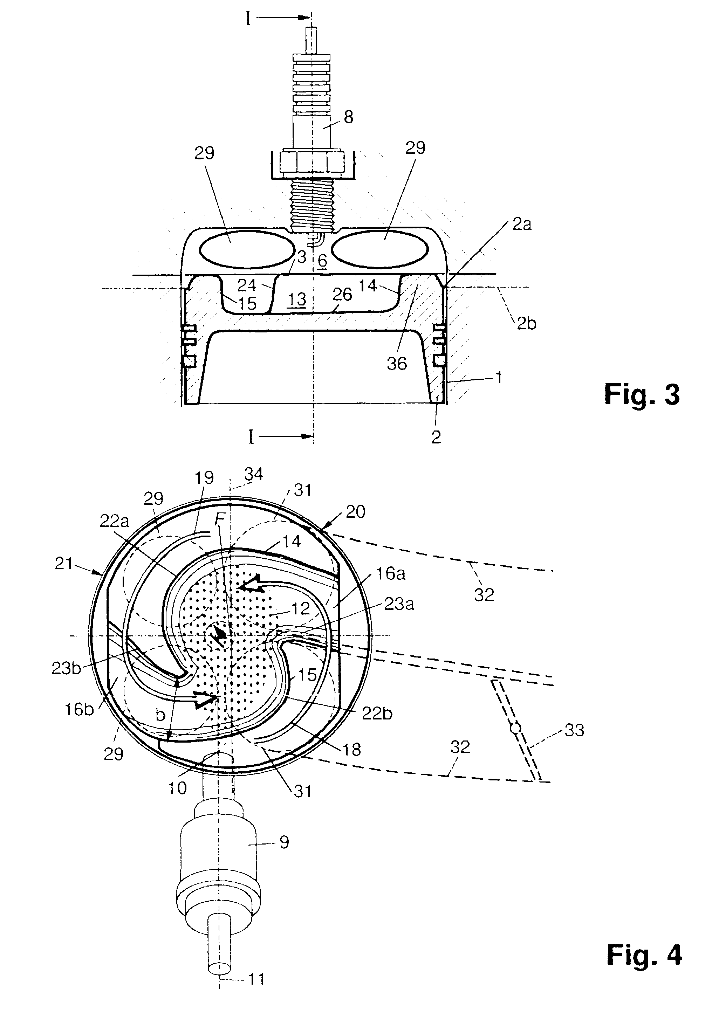

Die Fig. 4, 6 und 8 zeigen dagegen Ausführungsbeispiele mit vier, fünf und drei Ventilen 29, 31, bei denen die Kraftstoffeinspritzeinrichtung 9 im wesentlichen quer zu den Einlaßkanälen 32, also im Bereich der Motorlängsebene 34 angeordnet ist.

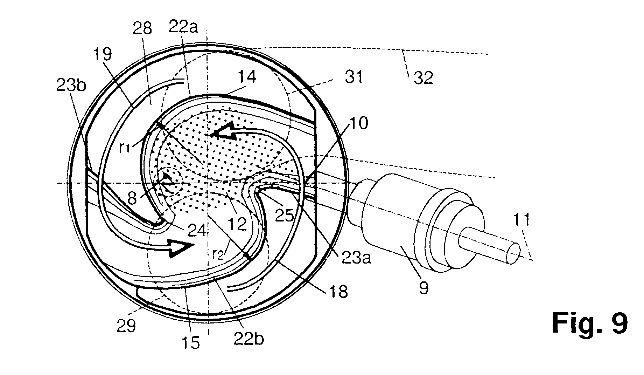

Fig. 9 demonstriert ein Ausführungsbeispiel mit einem Auslaßventil 29 und einem Einlaßventil 31, bei dem die Mündung 10 der Kraftstoffeinspritzeinrichtung 9 im Bereich der zur Motorlängsebene 34 normalen Motorquerebene 35 angeordnet ist.

In jedem Fall kann erreicht werden, daß durch die Drall-Teilströmungen 18, 19, die durch den Kraftstoffstrahl 12 entstehen, die Gemischwolke zusammengehalten wird und zur Zündeinrichtung 8 transportiert wird, um eine sichere Zündung zu gewährleisten.

## Patentansprüche

1. Brennkraftmaschine mit Fremdzündung und zumindest einem hin- und hergehenden Kolben (2), mit einer in einer dachförmigen Brennraumdeckfläche (5) angeordneten Zündeinrichtung (8) und mindestens einer Kraftstoffeinbringungseinrichtung (9) pro Zylinder (1) zur direkten Kraftstoffeinbringung im wesentlichen in Richtung Zündeinrichtung (8), sowie mit zumindest einem drallerzeugend ausgebildeten Einlaßkanal (32), wobei der Kolben (2) eine asymmetrisch geformte Kolbenmulde (13) aufweist, deren Muldenwände (14, 15) als die Drallbewegung der Zylinderladung unterstützende, bogenförmige Strömungsleitflächen ausgebildet sind, **dadurch gekennzeichnet**, daß die Kolbenmulde (13) zwischen gegenüberliegenden Muldenwänden (14, 15) im wesentlichen als offener, im Grundriß betrachtet mäanderförmiger oder S-förmiger Kanal ausgebildet ist, wobei zumindest ein Ende des Kanales einen vom Bereich des Kolbenrandes (17) ausgehenden Muldeneinlauf (16a, 16b) bildet.

2. Brennkraftmaschine nach Anspruch 1, **dadurch gekennzeichnet**, daß jedes Kanalende der Kolbenmulde (13) als vorzugsweise flacher Muldeneinlauf (16a, 16b) ausgebildet ist, wobei der erste Muldeneinlauf (16a) auf der Einlaßseite (20) und der zweite Muldeneinlauf (16b) auf der Auslaßseite (21) angeordnet ist.

3. Brennkraftmaschine nach Anspruch 2, **dadurch gekennzeichnet**, daß an den ersten Muldeneinlauf (16a) ein erster konkaver Muldenwandabschnitt (22a) anschließt, welcher sich in einer vorzugsweise scharfen Kante (24) mit einem vom zweiten Muldeneinlauf (16b) ausgehenden zweiten konvexen Muldenwandabschnitt (23b) schneidet, und daß vom ersten Muldeneinlauf (16a) ein von ersten konkaven Muldenwandabschnitt (22a) beabstandeter erster konvexer Muldenwandabschnitt (23a) ausgeht, welcher sich in einer weiteren Kante (25) mit einem an den zweiten Muldeneinlauf (16b) anschließenden zweiten konkaven Muldenabschnitt (22b) schneidet.

4. Brennkraftmaschine nach Anspruch 3, **dadurch gekennzeichnet**, daß der erste konkave Muldenwandabschnitt (22a) einen größeren Krümmungsradius (r₁) aufweist als der zweite konkave Muldenwandabschnitt (22b), wobei der Krümmungsradius (r₁) des ersten Muldenwandabschnittes (22b) vorzugsweise ein Drittel bis zwei Drittel des Kolbenradiuses (R) und der Krümmungsradius (r₂) des zweiten konkaven Muldenwandabschnittes (22b) vorzugsweise ein Viertel bis ein Halb des Kolbenradiuses (R) beträgt.

5. Brennkraftmaschine nach einem der Ansprüche 1 bis 4, **dadurch gekennzeichnet**, daß die Muldenwände (14, 15) zumindest abschnittsweise in zumindest einem konkaven Muldenwandabschnitt (22a, 22b) im wesentlichen parallel zur Kolbenachse (7) ausgebildet sind.

6. Brennkraftmaschine nach einem der Ansprüche 1 bis 5, **dadurch gekennzeichnet**, die Muldenwände (14, 15) zumindest abschnittsweise in zumindest einem konkaven Muldenwandabschnitt (14, 15) überhängend ausgebildet sind.

7. Brennkraftmaschine nach einem der Ansprüche 1 bis 6, **dadurch gekennzeichnet**, daß die Muldenwände (14, 15) zumindest abschnittsweise in zumindest einem konvexen Muldenwandabschnitt (23a, 23b) einen stumpfen Winkel mit dem Muldenboden (26) einschließt.

8. Brennkraftmaschine nach einem der Ansprüche 1 bis 7, **dadurch gekennzeichnet**, daß der Muldenrand (13a) zumindest teilweise durch zumindest eine Anformung (36) an der Oberfläche (3) des Kolbens (2) gebildet ist und zumindest zum Teil über eine von der Kolbenaußenkante (2a) aufgespannte Bezugsebene (2b) hinausragt.

9. Brennkraftmaschine nach Anspruch 8, **dadurch gekennzeichnet**, daß die Anformung (36) zumindest teilweise der dachförmigen Begrenzung des Brennraumes (6) nachgebildet ist.

10. Brennkraftmaschine nach einem der Ansprüche 1 bis 9, **dadurch gekennzeichnet**, daß die Kolbenmulde (13) im Bereich zumindest eines Muldeneinlaufes (16a, 16b) zum Kolbenrand (17) hin ausläuft.

11. Brennkraftmaschine nach einem der Ansprüche 1 bis 10, **dadurch gekennzeichnet**, daß der Flächenschwerpunkt (F) der Kolbenmulde (13) etwa im Bereich der Kolbenachse (7) liegt.

12. Brennkraftmaschine nach einem der Ansprüche 1 bis 11, **dadurch gekennzeichnet**, daß die Breite (b) der Kolbenmulde (13) - gemessen als Normalabstand zwischen zwei gegenüberliegenden Muldenwänden (14, 15) - im Bereich des Muldeneinlaufes (16a, 16b) am geringsten ist.

## Claims

1. Internal combustion engine with spark ignition and at least one reciprocating piston (2), with an ignition device (8) positioned in a roof-shaped top face (5) of the combustion chamber, and at least one fuel delivery device (9) per cylinder (1) for direct fuel delivery essentially in the direction of the ignition device (8), and with at least one intake port (32) configured so as to generate a swirl movement, the piston (2) featuring an asymmetrically shaped piston recess (13) whose recess walls (14, 15) are configured as arcuate flow guiding faces assisting the swirl movement of the cylinder charge, **characterized in that** the piston recess (13) between opposite recess walls (14, 15) is configured essentially as an open channel that is meander-shaped or S-shaped in plan view, at least one end of the channel forming a recess inlet area (16a, 16b) starting at the piston rim (17).

2. Internal combustion engine as claimed in Claim 1, **characterized in that** each channel end of the piston recess (13) is configured as a preferably flat recess inlet area (16a, 16b), the first recess inlet area (16a) being positioned on the intake side (20) and the second recess inlet area (16b) on the exhaust side (21).

3. Internal combustion engine as claimed in Claim 2, **characterized in that** the first recess inlet area (16a) is followed by a first concave recess wall section (22a), which intersects at a preferably sharp edge (24) with a second convex recess wall section (23b) departing from the second recess inlet area (16b), and wherein the first recess inlet area (16a) is followed by a first convex recess wall section (23a) placed at a distance from the first concave recess wall section (22a), which first convex recess wall section (23a) intersects at another edge (25) with a second concave recess wall section (22b) adjacent to the second recess inlet area (16b).

4. Internal combustion engine as claimed in Claim 3, **characterized in that** the first concave recess wall section (22a) has a larger curvature radius (r₁) than the second concave recess wall section (22b), the curvature radius (r₁) of the first concave recess wall section (22a) preferably amounting to one third to two thirds of the piston radius (R), and the curvature radius (r₂) of the second concave recess wall section (22b) to preferably one fourth to one half of the piston radius (R).

5. Internal combustion engine as claimed in any of Claims 1 to 4, **characterized in that** the recess walls (14, 15), or at least parts thereof, are essentially parallel to the piston axis (7) in at least one concave recess wall section (22a, 22b).

6. Internal combustion engine as claimed in any of Claims 1 to 5, **characterized in that** the recess walls (14, 15), or at least parts thereof, are configured so as to lean inwardly in at least one concave recess wall section (22a, 22b).

7. Internal combustion engine as claimed in any of Claims 1 to 6, **characterized in that** the recess walls (14, 15), or at least parts thereof, form an obtuse angle with the recess bottom (26) in at least one convex recess wall section (23a, 23b).

8. Internal combustion engine as claimed in any of Claims 1 to 7, **characterized in that** the recess rim (13a) is constituted, at least partially, by a projection (36) on the top face (3) of the piston (2), and characterized in that it projects at least partly beyond a reference plane (2b) defined by the outer edge (2a) of the piston (2).

9. Internal combustion engine as claimed in Claim 8, **characterized in that** the projection (36) conforms, at least in parts, to the roof-shaped bounding face of the combustion chamber (6).

10. Internal combustion engine as claimed in any of Claims 1 to 9, **characterized in that** the piston recess (13) flattens out towards the piston rim (17) in at least one recess inlet area (16a, 16b).

11. Internal combustion engine as claimed in any of Claims 1 to 10, **characterized in that** the plane centre of gravity (F) of the piston recess (13) is situated approximately in the area of the piston axis (7).

12. Internal combustion engine as claimed in any of Claims 1 to 11, **characterized in that** the width (b) of the piston recess (13), defined by the distance between two opposite recess walls (14, 15), is smallest in the area of the recess inlet (16a, 16b).

## Revendications

1. Moteur à combustion interne et allumage commandé, comprenant au moins un piston (2) se déplaçant en va et vient, un dispositif d'allumage (8) monté dans le plafond (5), en forme de toit, de la chambre de combustion, au moins un dispositif d'apport de carburant (9) par cylindre (1), introduisant directement le carburant essentiellement en direction du dispositif d'allumage (8), au moins un canal d'admission (32) conformé de manière à créer un effet de rotation, tandis que le piston (2) présente une cuvette (13), de forme asymétrique, dont les parois (14, 15) constituent des surfaces de forme courbe qui dirigent l'écoulement, en assistant le mouvement de rotation de la charge du cylindre,
caractérisé en ce que
la cuvette (13) du cylindre, est constituée, entre des parois opposées (14, 15), essentiellement par un canal ouvert, dessinant en plan un méandre ou un S et dont au moins une extrémité constitue une entrée de cuvette (16a, 16b) partant du bord du cylindre (17).

2. Moteur à combustion interne selon la revendication 1,
caractérisé en ce que
chaque extrémité de la cuvette de piston (13) constitue avantageusement une entrée de cuvette (16a, 16b) de forme plate, la première entrée (16a) se trouvant du côté admission (20) tandis que la seconde entrée (16b) se trouve du côté échappement (21).

3. Moteur à combustion interne selon la revendication 2,
caractérisé en ce qu'
à la première entrée (16a) se raccorde une première partie concave de paroi de cuvette (22a) qui vient se couper, le long d'une arête (24) de préférence vive, avec une deuxième partie de paroi de cuvette (23b) convexe, partant de la seconde entrée de cuvette (16b), tandis que de la première entrée de cuvette (16a) part une première partie de paroi de cuvette (23a), convexe, située à une certaine distance de la première partie concave de paroi (22a) et qui vient se couper selon une autre arête (25) avec une seconde partie de paroi concave (22b) se raccordant à la seconde entrée de cuvette (16b).

4. Moteur à combustion interne selon la revendication 3,
caractérisé en ce que
la première partie de paroi concave (22a) présente un rayon de courbure (r₁) supérieur à celui de la seconde partie de paroi concave (22b), ce rayon (r₁) de la première paroi concave (22a) étant compris de préférence entre un tiers et deux tiers du rayon (R) du piston, tandis que le rayon (r₂) de la seconde partie de paroi concave (22b) est compris de préférence entre un quart et une moitié du rayon (R) du piston.

5. Moteur à combustion interne selon l'une quelconque des revendications 1 à 4,
caractérisé en ce que
les parois de cuvette (14, 15) au moins localement dans au moins une partie de paroi concave (22a, 22b), sont essentiellement parallèles à l'axe de piston (7).

6. Moteur à combustion interne selon l'une quelconque des revendications 1 à 5,
caractérisé en ce que
les parois de cuvette (14, 15) au moins localement dans au moins une partie de paroi concave (22a, 22b), sont en surplomb.

7. Moteur à combustion interne selon l'une quelconque des revendications 1 à 6,
caractérisé en ce que
les parois de cuvette (14, 15) font, au moins localement dans au moins une partie de paroi convexe (23a, 23b), un angle obtus avec le fond du piston (26).

8. Moteur à combustion interne selon l'une quelconque des revendications 1 à 7,
caractérisé en ce que
le bord de cuvette (13a) est au moins en partie constitué par au moins une zone moulée en forme (36) à la surface (3) du piston (2) et qui dépasse au moins en partie, le plan de référence (2b) défini par le bord externe (2a) du piston.

9. Moteur à combustion interne selon la revendication 8,
caractérisé en ce que
la zone en forme (36) suit au moins en partie le plafond en forme de toit délimitant la chambre de combustion (6).

10. Moteur à combustion interne selon l'une quelconque des revendications 1 à 9,
caractérisé en ce que
la cuvette (13) dans la zone d'au moins une entrée (16a, 16b) aboutit au bord (17)du piston.

11. Moteur à combustion interne selon l'une quelconque des revendications 1 à 10,
caractérisé en ce que
le centre de gravité (F) de la cuvette (13) se trouve dans la zone de l'axe du piston (7).

12. Moteur à combustion interne selon l'une quelconque des revendications 1 à 11,
caractérisé en ce que
la largeur (b) de la cuvette de piston (13) mesurée sur une normale commune aux deux parois opposées (14, 15) est la plus faible dans la zone d'entrée de la cuvette (16a, 16b).
